# EUROPÄISCHE PATENTANMELDUNG

(11) **EP 1 645 819 A1**
(43) Veröffentlichungstag der Anmeldung: **12.04.2006**
(21) Anmeldenummer: 05021590.4
(22) Anmeldetag: 04.10.2005
(51) Int. Cl.: F25B 35/04

(54) **Vakuum-Sorptionsvorrichtung**

(30) Priorität: 08.10.2004 DE 102004049411
(71) Anmelder: Viessmann Werke GmbH & Co KG, 35107 Allendorf (DE)
(72) Erfinder: Stricker, Marc, Dr., 35037 Marburg (DE)
(74) Vertreter: Wolf, Günter

(57) **Zusammenfassung**

Die Erfindung betrifft eine Vakuum-Sorptionsvorrichtung, umfassend einen periodisch ein Kältemittel ad- oder desorbierenden Sorber (1), einen Verdampfer (2) und einen Kondensator (3), die gemeinsam in einem Vakuumgehäuse (4) angeordnet sind. Nach der Erfindung ist vorgesehen, dass das Vakuumgehäuse (4) einen mindestens doppelwandigen, den Kondensator (3) bildenden Bereich (5) aufweist.

## Beschreibung

Die Erfindung betrifft eine Vakuum-Sorptionsvorrichtung gemäß dem Oberbegriff des Patentanspruchs 1.

Eine derartige Vorrichtung ist aus der DE 102 17 443 A1 und der DE 103 10 748 B3 bekannt. Diese umfassen jeweils einen periodisch ein Kältemittel ad- oder desorbierenden Sorber, einen Verdampfer und einen Kondensator, die gemeinsam in einem Vakuumgehäuse angeordnet sind. Bei der DE 102 17 443 A1 sind Verdampfer und Kondensator darüber hinaus, wie bei der DE 199 02 695 A1, als ein gemeinsames Bauteil ausgebildet.

Bezüglich der Funktionsweise dieser Vorrichtungen wird zunächst auf die genannten Schriften verwiesen.

Die Verwendung eines Bauteils sowohl als Kondensator als auch als Verdampfer hat einerseits konstruktiv den Vorteil, dass insgesamt weniger Bauteile erforderlich sind. Andererseits senkt diese Maßgabe den Wirkungsgrad der Vorrichtung herab, da die Bauteile nicht auf dem jeweiligen, zur Prozessphase gehörenden Temperaturniveau verweilen können und somit Aufheiz- und Abkühlverluste gegenüber einer getrennten Ausführung (wie nach der DE 103 10 748 B3) auftreten.

Die prinzipiell getrennte Bauweise führt umgekehrt zwangsläufig zu einem höheren konstruktiven Aufwand, da prinzipiell ein weiterer Wärmeübertrager vorgesehen sein muss.

Der Erfindung liegt die Aufgabe zugrunde, bei einer Vorrichtung der eingangs genannten Art bei prinzipiell getrennter Bauweise von Kondensator und Verdampfer den zusätzlichen Konstruktionsaufwand so gering wie möglich zu halten.

Diese Aufgabe ist mit einer Vakuum-Sorptionsvorrichtung der eingangs genannten Art durch die im Kennzeichen des Patentanspruchs 1 aufgeführten Merkmale gelöst.

Danach ist vorgesehen, dass das Vakuumgehäuse einen mindestens doppelwandigen, den Kondensator bildenden Bereich aufweist. Mit anderen Worten ausgedrückt, ist ein mindestens teilweise doppelwandiges Vakuumgehäuse vorgesehen, bei dem die dem Sorber zugewandte Gehäusewand gleichzeitig die Wärmeübertragungsfläche des Kondensators bildet. Dieser Doppelmantel wird von einem Wärmeträgermedium durchströmt und nimmt so die in der Desorptionsphase anfallende Kondensationswärme auf. Das anfallende Kondensat läuft bei einer bevorzugten Ausführungsform, die noch genauer erläutert wird, an der Behälterwand auf den Boden des Gehäuses herunter, von wo es dann über eine geeignete Ablaufvorrichtung in den vorzugsweise unter dem Sorber befindlichen Verdampfer abläuft.

Andere vorteilhafte Weiterbildungen, insbesondere die zweifache Doppelwandigkeit des Gehäuses, ergeben sich aus den abhängigen Patentansprüchen.

Die erfindungsgemäße Vorrichtung einschließlich ihrer vorteilhaften Weiterbildungen wird nachfolgend anhand der zeichnerischen Darstellung eines bevorzugten Ausführungsbeispiels näher erläutert.

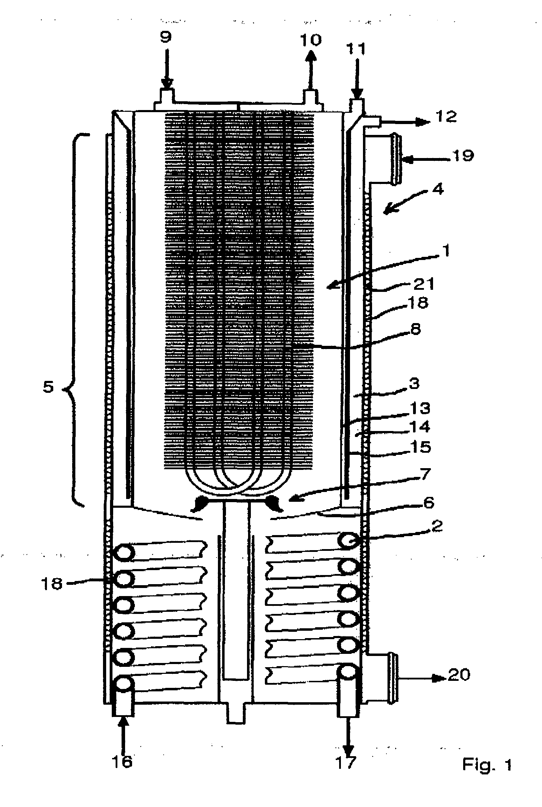

Es zeigt
- Figur 1: im Schnitt eine bevorzugte Ausführungsform der erfindungsgemäßen Vakuum-Sorptionsvorrichtung.

Die in Figur 1 dargestellte Vakuum-Sorptionsvorrichtung umfasst insbesondere einen periodisch ein Kältemittel ad- oder desorbierenden Sorber 1, einen Verdampfer 2 und einen Kondensator 3.

Der Sorber 1 ist dabei vorzugsweise aus einem Wärmetauscher 8 und einem auf diesem angeordneten Sorptionsmittel, vorzugsweise Zeolith, gebildet. Der Wärmetauscher 8 weist Zu- und Abfuhranschlüsse 9, 10 für ein von einer Wärmequelle (beispielsweise einem Gasbrenner, nicht dargestellt) erwärmtes Wärmeträgermedium auf, die am oberen Ende des Vakuumgehäuses 4 angeordnet sind.

Die Komponenten Sorber 1, Verdampfer 2 und Kondensator 3 sind, wie beim vorbeschriebenen Stand der Technik gemeinsam in dem erwähnten Vakuumgehäuse 4 angeordnet. Dabei ist dieses vorzugsweise als Behälter ausgebildet und der Sorber 1 oberhalb des Verdampfers 2 angeordet. Ferner ist im Vakuumgehäuse 4 zwischen dem Sorber 1 und dem Verdampfer 2 eine Trennwand 6 mit einer verschließbaren Öffnung 7 vorgesehen.

Bezüglich des Verdampfers 2 ist darüber hinaus vorteilhaft vorgesehen, dass dieser als Wendelrohrwärmetauscher mit vertikal verlaufender Wendelachse ausgebildet ist. Dieser Verdampfer 2 weist ferner Zu- und Abfuhranschlüsse 16, 17 auf, die am Boden des Vakuumgehäuses 4 angeordnet sind.

Wesentlich für die erfindungsgemäße Vorrichtung ist nun, dass das Vakuumgehäuse 4 einen mindestens doppelwandigen, den Kondensator 3 bildenden Bereich 5 aufweist. - Die Maßgabe "mindestens doppelwandig" wird weiter unten noch erläutert.

Dabei ist vorteilhaft, wie dargestellt, vorgesehen, dass sich die Doppelwandigkeit des Kondensators rund um den Sorber 1 und vertikal gesehen bis zur Trennwand 6 erstreckt. Der Kondensator 2 weist ferner zu- und Abfuhranschlüsse 11, 12 auf, die am oberen Ende des Vakuumgehäuses 4 angeordnet sind.

Um das Auskondensieren des in der Desorptionsphase aus dem Zeolith desorbierten Wassers zu optimieren, ist darüber hinaus vorteilhaft vorgesehen, dass im Kondensator 3 ein erster, schmaler, mit dem zufuhranschluss 11 verbundener Strömungskanal 13 sorberseitig, eine zweiter, breiterer, mit dem Abfuhranschluss 12 verbundener Strömungskanal 14 sorberabgewandt und zwischen den beiden Strömungskanälen 13, 14 eine vertikal verlaufende und den Sorber 1 umschließende Trennwand 15 angeordnet ist. Am Zufuhranschluss 11 eintretendes Wärmeträgermedium strömt also zunächst durch einen relativ schmalen Ringkanal 13 in Richtung Verdampfer 2. Im Bereich der Trennwand 7 erfolgt eine Strömungsumlenkung in einen breiteren Strömungsringkanal 14, der in einem Abfuhranschluss 12 am oberen Ende des Vakuumgehäuses 4 endet.

Um ferner das Ablaufverhalten des desorbierten Wassers an der sorberseitigen Oberfläche des Kondensators 3 zu verbessern, ist vorgesehen, dass diese eine hydrophobe Beschichtung aufweist (nicht darstellt).

Neben der spezielle Kondensatorkonstruktion, besteht eine weitere besonders bevorzugte Ausführungsform der erfindungsgemässen Vakuum-Sorptionsvorrichtung darin, dass der Bereich 5 bei zweifacher Doppelwandigkeit (Anspruch 1 gibt die Maßgabe "mindestens einfache Doppelwandigkeit" vor) sorberzugewandt als der Kondensator 3 und sorberabgewandt als ein Abgaswärmetauscher 18 ausgebildet ist. Der ringraumartige Kondensator 3 ist nach dieser Ausführungsform somit von einem weiteren Ringraum, nämlich einem Abgaswärmetauscher 18, umschlossen. Der Abgaswärmetauscher 18 dient dazu, die Wärme des Abgases der vorerwähnten Wärmequelle auch noch wirkungsgradsteigernd für den Sorptionsprozess zu nutzen.

Um auch eine Wärmeübertragung im Bereich des Verdampfers 2 zu realisieren, erstreckt sich der Abgaswärmetauscher 18 dabei - im Gegensatz zum Kondensator 3 - in einfacher Doppelwandigkeit bis zum Verdampfer 2, d. h. der Abgaswärmetauscher 18 umschließt im unteren Bereich des Vakuumgehäuses 4 auch den Verdampfer 2.

Mit anderen Worten ausgedrückt, umschließt der vorzugsweise vorgesehene Abgaswärmetauscher 18 sowohl den Verdampfer 2 als auch den Kondensator 3, wobei an seinen beiden Enden Zu- und Abfuhranschlüsse 19, 20 vorgesehen sind.

Ferner ist zur Verbesserung der Wärmeübertragung vorgesehen, dass im Abgaswärmetauscher 18 Strömungsumlenkungen 21, vorzugsweise Sicken, angeordnet sind. Diese bewirken, dass das Abgas großflächig mit den Wänden zum Verdampfer 2 und Kondensator 3 in Kontakt kommt. Darüber hinaus stützen diese vorteilhaft auch die doppelten Wände gegeneinander ab.

Zum besseren Verständnis der Erfindung wird schließlich noch die Funktionsweise der erfindungsgemäßen Vakuum-Sorptionsvorrichtung anhand von Figur 1 erläutert.

Die sogenannte Desorptionsphase beginnt mit der Aufheizung des Sorbers 1, beispielsweise durch die erwähnte, nicht dargestellte Wärmequelle, vorzugsweise ein Gasbrenner. Dabei steigen Druck und Temperatur in der Anlage. Wasserdampf (Arbeitsmittel) desorbiert aus dem Sorber 1 und gelangt zum Kondensator 3. Dort wird der Dampf unter Abgabe von Kondensationswärme verflüssigt. Diese Wärme wird beispielsweise über den Abfuhranschluss 12 einem Heizkreis in Form von Nutzwärme zugeführt. Durch weitere Wärmezufuhr durch den Gasbrenner wird das Sorptionsmittel (wie gesagt, vorzugsweise zeolith) im Sorber 1 soweit erhitzt, dass das adsorbierte Wasser vollständig aus dem zeolith ausgetrieben wird. Das am Kondensator verflüssigte Arbeitsmittel wird durch die bedarfsweise verschließbare Öffnung 7 in den verdampfer 2 geleitet. Nachdem der Zeolith seine minimale Wasserbeladung erreicht hat, wird die Beheizung bzw. der Gasbrenner abgeschaltet.

Kurz zusammengefasst ausgedrückt, wird der Sorber 1 in der Desorptionsphase also beheizt und gibt dabei ein zuvor adsorbiertes Kältemittel frei, das am Kondensator 2 unter Wärmeabgabe auskondensiert.

Es folgt nun die sogenannte Adsorptionsphase.

Diese beginnt mit der Abkühlung des Sorbers 1, dessen Wärme über den Abfuhranschluss 10 beispielsweise an das Heiznetz in Form von Nutzwärme abgeführt wird. Dabei sinken Druck und Temperatur in der Anlage. Ist der Druck im Sorber kleiner als im Verdampfer 2 öffnet der Öffnung 7 und Arbeitsmittel (Wasserdampf) strömt vom Verdampfer 2 in den Sorber 1, wo es unter Freisetzung der Adsorptionswärme adsorbiert wird. Die Adsorptionswärme wird ebenfalls in Form von Nutzwärme in das Heiznetz abgeführt. Aufgrund der hohen Verdampfungsenthalpie des im Verdampfer gespeicherten flüssigen Wassers, kühlt sich dieses stark ab. Sobald die Temperatur des Wassers unterhalb der Umgebungstemperatur liegt (beispielsweise bei 0°C und 6 mbar Druck), lässt sich kostenfrei über den Zufuhranschluss 16 Umgebungswärme in den Prozess einkoppeln. Wenn die erzeugte Adsorptionswärme nicht mehr ausreicht, um die nötige Vorlauftemperatur an einem angeschlossenen Heizkreis aufrecht zu erhalten, wird die Adsorptionsphase beendet.

Kurz zusammengefasst ausgedrückt, nimmt der Sorber 1 also in der Adsorptionsphase vom Verdampfer 2 verdampftes Kältemittel unter Wärmeabgabe auf.

Es folgt nun wiederum die Desorptionsphase oder die in der DE 103 10 748 Bb beschriebene Zwischenphase zur Entfernung von Fremdgasen, falls dies nötig sein sollte

### Bezugszeichenliste

- 1: Sorber
- 2: Verdampfer
- 3: Kondensator
- 4: Vakuumgehäuse
- 5: Bereich
- 6: Trennwand
- 7: Öffnung
- 8: Wärmetauscher
- 9: Zufuhranschluss (Wärmetauscher)
- 10: Abfuhranschluss (Wärmetauscher)
- 11: Zufuhranschluss (Kondensator)
- 12: Abfuhranschluss (Kondensator)
- 13: Strömungskanal (erster)
- 14: Strömungskanal (zweiter)
- 15: Trennwand
- 16: Zufuhranschluss (Verdampfer)
- 17: Abfuhranschluss (Verdampfer)
- 18: Abgaswärmetauscher
- 19: Zufuhranschluss (Abgaswärmetauscher)
- 20: Abfuhranschluss (Abgaswärmetauscher)
- 21: Strömungsumlenkung

## Patentansprüche

1. Vakuum-Sorptionsvorrichtung, umfassend einen periodisch ein Kältemittel ad- oder desorbierenden Sorber (1), einen Verdampfer (2) und einen Kondensator (3), die gemeinsam in einem Vakuumgehäuse (4) angeordnet sind,
**dadurch gekennzeichnet,**
**dass** das Vakuumgehäuse (4) einen mindestens doppelwandigen, den Kondensator (3) bildenden Bereich (5) aufweist.

2. Vakuum-Sorptionsvorrichtung nach Anspruch 1,
**dadurch gekennzeichnet,**
**dass** das Vakuumgehäuse (4) als Behälter ausgebildet und der Sorber (1) oberhalb des Verdampfers (2) angeordnet ist.

3. Vakuum-Sorptionsvorrichtung nach Anspruch 1 oder 2,
**dadurch gekennzeichnet,**
**dass** im Vakuumgehäuse (4) zwischen dem Sorber (1) und dem Verdampfer (2) eine Trennwand (6) mit einer verschließbaren Öffnung (7) vorgesehen ist, wobei sich vorzugsweise die Doppelwandigkeit des Kondensators rund um den Sorber (1) und vertikal gesehen bis zur Trennwand (6) erstreckt.

4. Vakuum-Sorptionsvorrichtung nach einem der Ansprüche 1 bis 3,
**dadurch gekennzeichnet,**
**dass** der Sorber (1) aus einem Wärmetauscher (8) und einem auf diesem angeordneten Sorptionsmittel gebildet ist, wobei als Soptionsmittel vorzugsweise zeolith verwendet wird, wobei vorzugsweise der Wärmetauscher (8) Zu- und Abfuhranschlüsse (9, 10) aufweist, die am oberen Ende des Vakuumgehäuses (4) angeordnet sind.

5. Vakuum-Sorptionsvorrichtung nach einem der Ansprüche 1 bis 4,
**dadurch gekennzeichnet,**
**dass** der Kondensator (2) Zu- und Abfuhranschlüsse (11, 12) aufweist, die am oberen Ende des Vakuumgehäuses (4) angeordnet sind, wobei vorzugsweise im Kondensator (3) ein erster, schmaler, mit dem Zufuhranschluss (11) verbundener Strömungskanal (13) sorberseitig, ein zweiter, breiterer, mit dem Abfuhranschluss (12) verbundener Strömungskanal (14) sorberabgewandt und zwischen den beiden Strömungskanälen (13, 14) eine vertikal verlaufende und den Sorber (1) umschließende Trennwand (15) vorgesehen ist.

6. Vakuum-Sorptionsvorrichtung nach einem der Ansprüche 1 bis 5,
**dadurch gekennzeichnet,**
**dass** der Kondensator (3) zur Ablaufverbesserung des Kondensats sorberseitig eine hydrophobe Beschichtung aufweist.

7. Vakuum-Sarptionsvorrichtung nach einem der Ansprüche 1 bis 6,
**dadurch gekennzeichnet,**
**dass** der Verdampfer (2) als Wendelrohrwärmetauscher mit vertikal verlaufender Wendelachse ausgebildet ist.

8. Vakuum-Sorptionsvorrichtung nach einem der Ansprüche 1 bis 7,
**dadurch gekennzeichnet,**
**dass** der Verdampfer (2) Zu- und Abfuhranschlüsse (16, 17) aufweist, die am Boden des Vakuumgehäuses (4) angeordnet sind.

9. Vakuum-Sorptionsvorrichtung nach einem der Ansprüche 1 bis 8,
**dadurch gekennzeichnet,**
**dass** der Bereich (5) bei zweifacher Doppelwandigkeit sorberzugewandt als der Kondensator (3) und sorberabgewandt als ein Abgaswärmetauscher (18) ausgebildet ist, wobei sich vorzugsweise der Abgaswärmetauscher (18) in einfacher Doppelwandigkeit bis zum Verdampfer (2) erstreckt, wobei vorzugsweise der Abgaswärmetauscher (18) sowohl den Verdampfer (2) als auch den Kondensator (3) umschließt, wobei an seinen beiden Enden Zu- und Abfuhranschlüsse (19, 20) vorgesehen sind, wobei

10. Vakuum-Sorptionsvorrichtung nach Anspruch 9,
**dadurch gekennzeichnet ,**
**dass** im Abgaswärmetauscher (18) zur Verbesserung der Wärmeübertragung und zur Stabilitätsunterstützung Strömungsumlenkungen (21) angeordnet sind, wobei als Strömungsumlenkungen (21) vorzugsweise Sicken verwendet werden.
